**Europäisches Patentamt**

**European Patent Office**

**Office européen des brevets**

(19)

(11) Numéro de publication: **0 146 046**
**B1**

(12) **FASCICULE DE BREVET EUROPEEN**

(45) Date de publication du fascicule du brevet:
**01.04.87**

(51) Int. Cl.⁴: **D 07 B 1/06**

(21) Numéro de dépôt: **84114514.7**

(22) Date de dépôt: **30.11.84**

(54) **Câble de renfort constitué uniquement ou au moins en partie par un assemblage de torons de deux fils; articles comportant de tels câbles.**

(30) Priorité: **16.12.83 FR 8320424**

(43) Date de publication de la demande:
**26.06.85 Bulletin 85/26**

(45) Mention de la délivrance du brevet:
**01.04.87 Bulletin 87/14**

(84) Etats contractants désignés:
**AT BE CH DE FR GB IT LI LU NL SE**

(56) Documents cités:
**FR - A - 2 477 584**

(73) Titulaire: **MICHELIN & CIE (Compagnie Générale des Etablissements Michelin) Société dite:, 4 rue du Terrail, F-63000 Clermont-Ferrand (FR)**

(72) Inventeur: **Charvet, Jean-Louis, 25 rue Alfred de Musset, F-63000 Clermont-Ferrand (FR)**
Inventeur: **Garcia, Christian, 16 rue des Hauts de Madargue, F-63200 Riom (FR)**

(74) Mandataire: **Doussaint, Jean-Marie et al, MICHELIN & CIE Service K. Brevets, F-63040 Clermont-Ferrand Cedex (FR)**

**Description**

L'invention concerne les câbles pour renforcer des matières et plus particulièrement les câbles destinés à renforcer les caoutchoucs. De tels câbles dits «câbles de renfort» sont utilisés par exemple pour réaliser des courroies, des tuyaux, des enveloppes de pneumatiques.

Il est connu d'utiliser des câbles de renfort constitués par des assemblages de torons, chaque toron étant constitué par deux fils. Le but de l'emploi de ces câbles est de permettre une bonne imprégnation de leur structure par une matière, par exemple par la matière qu'ils doivent renforcer, notamment une gomme de caoutchouc, de façon à limiter les problèmes de corrosion lors de l'utilisation des articles qui comportent ces câbles. De tels câbles sont décrits par exemple dans les demandes de brevets français N° 2 453 933 et 2 505 372.

Les câbles à torons de deux fils actuellement connus provoquent au moins un des inconvénients suivants:

— encombrement excessif;

— travail hétérogène de l'assemblage par suite d'une répartition hétérogène des efforts entre les torons d'une part et entre les fils constituant les torons d'autre part.

Le but de l'invention est d'éviter ces inconvénients; c'est-à-dire de proposer un câble constitué uniquement ou au moins en partie par un assemblage de torons de deux fils qui présente à la fois les caractéristiques suivantes:

— bonne imprégnation de la structure de l'assemblage;

— faible encombrement;

— travail homogène de l'assemblage par suite d'une répartition homogène des efforts d'une part entre les torons de cet assemblage et d'autre part entre les fils constituant ces torons.

En conséquence, le câble de renfort constitué uniquement ou au moins en partie par un assemblage de torons de deux fils conforme à l'invention est caractérisé en ce que l'assemblage a les caractéristiques suivantes lorsque son axe est rectiligne:

a) dans chaque toron les deux fils sont enroulés l'un autour de l'autre dans le même sens, dit «sens du toron», avec un pas constant dit «pas du toron», la longueur de ce pas étant inférieure à 300 mm;

b) dans chaque toron les deux fils ont entre eux un contact pratiquement linéaire, cette ligne de contact décrivant pratiquement une hélice, dite «hélice de contact», autour de l'axe de l'assemblage;

c) toutes les hélices de contact ont le même sens, dit «sens de l'assemblage» et la même longueur de pas constante dite «longueur du pas de l'assemblage»;

d) l'assemblage vérifie au moins une des deux conditions suivantes:

(I) il est constitué par deux torons, les longueurs des pas de torons étant égales, les sens des torons étant opposés;

(II) il est constitué par au moins deux torons et par au plus quatre torons; la longueur du pas de l'assemblage est égale à la longueur du pas d'au moins un des torons, le sens de l'assemblage étant le même que celui de ce toron ou de ces torons; au moins un autre toron de l'assemblage a soit une longueur de pas différente de la longueur du pas de l'assemblage, soit à la fois une longueur de pas égale à la longueur du pas de l'assemblage et un sens opposé au sens de l'assemblage.

L'invention concerne également le câble précédemment défini lorsqu'il est imprégné d'une matière, par exemple d'un caoutchouc. L'invention concerne également les articles comportant au moins un câble de renfort à l'invention.

Les exemples qui suivent ainsi que les figures toutes schématiques du dessin correspondant à ces exemples sont destinés à illuster l'invention et à en faciliter la compréhension sans toutefois en limiter la portée.

Sur le dessin:

la figure 1 représente, vu de profil, un câble conforme à l'invention;

les figures 2 et 3 représentent chacune une coupe d'un toron du câble représenté à la figure 1;

la figure 4 représente une coupe du câble représenté à la figure 1;

les figures 5 à 13 représentent chacune un câble, les câbles représentés aux figures 5 à 9, 12, 13 étant conformes à l'invention et les câbles représentés aux figures 10, 11 étant des câbles connus; chacune de ces figures 5 à 13 est constituée de trois parties: une partie (I) représentant le câble vu de profil, une partie (II) représentant une série de coupes de ce câble, et une partie (III) représentant plus en détail certaines des coupes de la partie (II).

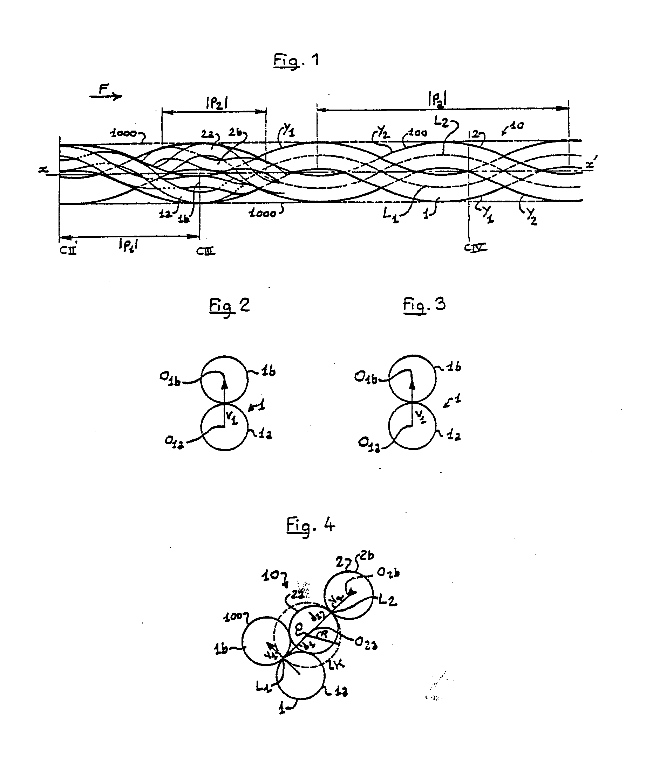

On voit à la figure 1 un câble 10 conforme à l'invention. Ce câble 10 est constitué uniquement par un assemblage 100 dont seuls deux torons ont été représentés à la figure 1 pour la clarté du dessin. Ces torons sont référencés 1 et 2. Cette représentation n'est pas limitative.

Le toron 1 est constitué par les deux fils continus 1a, 1b et le toron 2 est constitué par les deux fils continus 2a, 2b. Pour la clarté du dessin, chaque toron 1 ou 2 est schématisé par deux lignes, $Y_1$ pour le toron 1 ou $Y_2$ pour le toron 2, chacune de ces lignes $Y_1$ ou $Y_2$ correspondant au cylindre fictif tangent à ce toron, et les fils 1a, 1b, 2a, 2b n'ont été représentés que sur une partie du dessin à la figure 1. Sur la figure 1, chacune de ces lignes $Y_1$ ou $Y_2$ est continue lorsque le toron correspondant 1 ou 2 est visible de profil, cette ligne étant pointillée dans le cas contraire. L'axe xx' de l'assemblage 100 est l'axe du cylindre 1000 fictif tangent à l'assemblage 100, ce cylindre 1000 étant schématisé par des lignes pointillées à la figure 1. L'axe xx' est supposé rectiligne pour les descriptions qui suivent. Dans chaque toron 1, 2 les deux fils 1a, 1b pour le toron 1 ou 2a, 2b pour le toron 2 sont enroulés l'un autour de l'autre dans le même sens dit «sens du toron».

Pour la clarté du dessin, dans la figure 1, des espaces ont été représentés entre les torons d'une part et entre les fils des torons d'autre part.

La figure 2 représente la coupe du toron 1 représentée par le segment de droite CII à la figure 1 et la figure 3 représente la coupe du toron 1 représentée par le segment de droite CIII à la figure 1. Ces coupes sont effectuées selon des plans perpendiculaires à l'axe xx' de l'assemblage 100, ces coupes étant regardées dans le même sens, par exemple dans le sens xx', comme représenté à la figure 1, c'est-à-dire dans le sens de la flèche F. Dans la suite de cette description toutes les coupes selon des plans perpendiculaires à l'axe xx' seront regardées dans le sens de la flèche F.

Sur les figures 2, 3, $O_{1a}$ représente le centre de la coupe du fil 1a et $O_{1b}$ représente le centre de la coupe du fil 1b. A chacune des figures 2, 3, le vecteur $V_1$ joint les centres $O_{1a}$, $O_{1b}$ et il est orienté de $O_{1a}$ vers $O_{1b}$. Les coupes des figures 2, 3 sont telles que les vecteurs $V_1$ de ces coupes sont pratiquement parallèles et de même sens. La distance $|p_1|$ séparant la coupe CIII de la coupe CII est la plus courte le long de l'axe xx' pour retrouver le parallélisme et l'orientation du vecteur $V_1$ de la coupe CII (figure 1). La distance $|p_1|$ constante pour cet assemblage 100 et mesurée en millimètres représente par définition la longueur du «pas $p_1$ du toron 1». La même définition s'applique au toron 2, la longueur $|p_2|$ du pas $p_2$ de ce toron 2 étant représentée à la figure 1. Les longueurs $|p_1|$, $|p_2|$ sont inférieures à 300 mm.

Dans chaque toron 1, 2, les deux fils 1a, 1b ou 2a, 2b ont entre eux un contact pratiquement linéaire, cette ligne de contact étant représentée par la ligne pointillée $L_1$ pour le toron 1 et par la ligne pointillée $L_2$ pour le toron 2. Chacune de ces lignes $L_1$, $L_2$ décrit pratiquement une hélice dite «hélice de contact» autour de l'axe xx'. Ces hélices $L_1$, $L_2$ ont le même sens, dit «sens de l'assemblage» et la même longueur de pas constante $|p_a|$ dite «longueur du pas $p_a$ de l'assemblage»; cette longueur $|p_a|$ est aussi mesurée en millimètres.

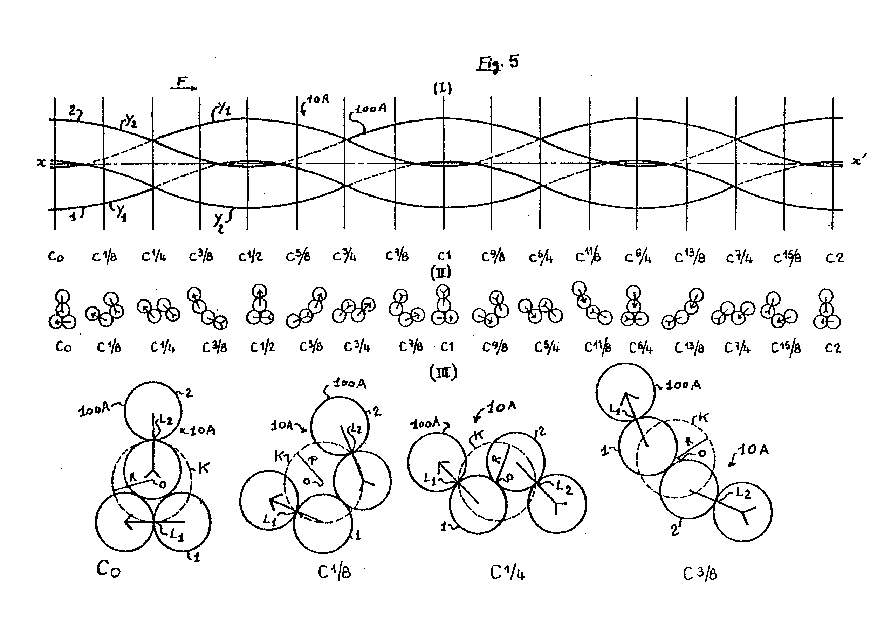

La figure 4 représente une coupe du câble 10 selon un plan perpendiculaire à l'axe xx', ce plan étant représenté par le segment de droite CIV à la figure 1. Sur cette figure 4, l'hélice $L_1$ est représentée par un point de même que l'hélice $L_2$.

Pour la simplicité du dessin tous les fils de l'assemblage 100 ont sur la figure 4 la forme de cercles tangents au point $L_1$, pour le toron 1 et au point $L_2$ pour le toron 2. Sur cette figure 4, l'axe xx' est représenté par le point 0, le vecteur $V_1$ a la signification précédemment définie et le vecteur $V_2$ relatif au toron 2 joint le centre $O_{2a}$ du fil 2a ou centre $O_{2b}$ du fil 2b, ce vecteur $V_2$ étant orienté de $O_{2a}$ vers $O_{2b}$. Pour la clarté du dessin, afin de différencier facilement les vecteurs $V_1$ et $V_2$, l'extrémité du vecteur $V_2$ située en $O_{2b}$ est représentée comme une pointe de flèche renversée.

Par définition, les pas $p_1$, $p_2$, $p_a$ sont des valeurs algébriques dont les longueurs $|p_1|$, $|p_2|$, $|p_a|$ sont les valeurs absolues, et chaque valeur $p_1$ ou $p_2$ est positive si le sens de l'enroulement du toron correspondant 1 ou 2 est celui de l'assemblage 100 et négativement dans le cas contraire, le pas $p_a$ de l'assemblage 100 étant donc toujours choisi positif quel que soit le sens de cet assemblage, les pas $p_1$, $p_2$, $p_a$ étant constants pour l'assemblage 100.

L'assemblage 100 vérifie au moins une des deux conditions suivantes:

(I) Il est constitué par deux torons, les longueurs des pas des torons étant égales, les sens des torons étant opposés. Les pas des torons vérifient alors la relation

$$p_1 = -p_2.$$

(II) Il est constitué par au moins deux torons et par au plus quatre torons. La longueur du pas de l'assemblage est égale à la longueur du pas d'au moins un des torons, le sens de l'assemblage étant le même que celui de ce toron ou de ces torons. Au moins un autre toron de l'assemblage 100 a soit une longueur de pas différente de la longueur du pas de l'assemblage, soit à la fois une longueur de pas égale à la longueur du pas de l'assemblage et un sens opposé au sens de l'assemblage.

Lorsque l'assemblage 100 est constitué par deux torons, cette condition (II) peut s'exprimer par exemple de la façon suivante:

$p_a = p_1$ et

$p_2$ différent de $p_a$, $p_2$ pouvant être positif ou négatif.

Le câble 10 conforme à l'invention conduit à la géométrie suivante.

La distance des hélices de contact à l'axe de l'assemblage, dans un plan perpendiculaire à cet axe, est pratiquement la même pour toutes ces hélices. Cette distance est pratiquement constante ou varie peu lorsqu'on déplace ce plan le long de l'axe. C'est ainsi qu'à la figure 4, la distance $d_1$ séparant les points 0 et $L_1$ est pratiquement égale à la distance $d_2$ séparant les points 0 et $L_2$. Cette distance commune reste pratiquement constante ou varie peu lorsque le plan de la figure 4 se déplace le long de l'axe xx' tout en restant perpendiculaire à cet axe, cette variation étant inférieure à environ 50%. A la figure 4, les points $L_1$, $L_2$ sont donc pratiquement toujours situés sur un cercle, le rayon de ce cercle étant constant ou variant peu lorsque le plan de la figure 4 se déplace le long de l'axe xx'. Quel que soit ce plan, les points $L_1$ et $L_2$ sont donc soit pratiquement situés sur un cercle de référence K de centre 0 et de rayon R constant, soit à proximité de ce cercle K. Ce cercle K est représenté en pointillé à la figure 4.

Cette géométrie pratiquement constante permet de solliciter tous les fils de l'assemblage 100 de façon pratiquement homogène lors du travail de cet assemblage.

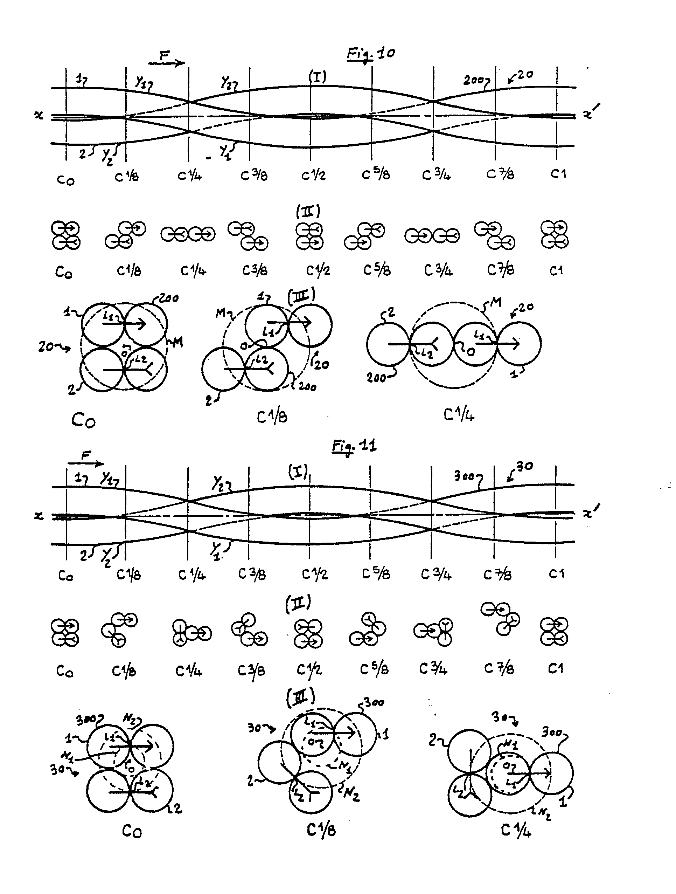

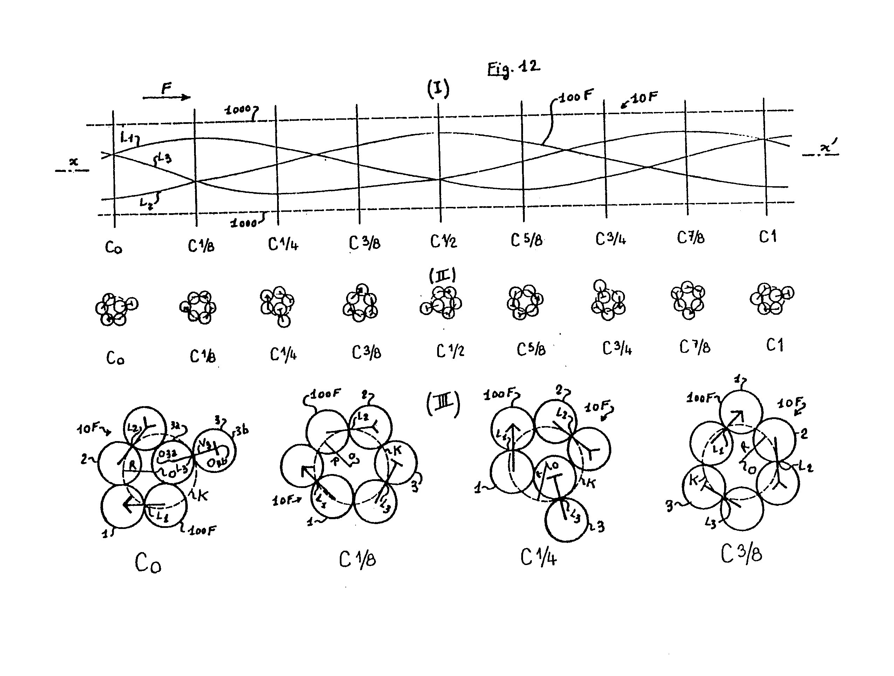

Les figures 5 à 13 représentent chacune un câble constitué par des torons de deux fils, ces câbles étant soit conformes à l'invention (figures 5 à 9, 12, 13) soit non conformes à l'invention (figures 10 et 11).

Chacune de ces figures se compose de trois parties:

— une partie (I) représentant le câble vu de profil;

— une partie (II) représentant une série de coupes de ce câble effectuées conformément aux descriptions précédentes, c'est-à-dire perpendiculairement à l'axe xx', ces coupes étant regardées dans le sens xx', c'est-à-dire dans le sens de la flèche F;

— une partie (III) représentant plus en détail certaines des coupes de la partie (II).

Chacune des coupes représentées aux parties (II) et (III) est référencée par la lettre C suivie d'un nombre entier ou fractionnaire qui représente le rapport entre la distance séparant cette coupe de la coupe

$C_0$ et la longueur du pas de l'assemblage, ce nombre augmentant dans le sens de la flèche F, comme représenté sur les parties (I) où ces coupes sont représentées par des segments de droite.

Chacun des câbles représentés aux figures 5 à 13 est constitué par des fils qui ont par exemple la forme de cylindres de révolution de même diamètre lorsque'on les dispose de façon linéaire, ces fils ont sur les coupes des parties (II), (III) une forme qui est circulaire, pour la simplicité du dessin. Pour chaque câble représenté sur une des figures 5 à 13, chaque coupe de la partie (II) de cette figure a une forme générale qui correspond à l'une des coupes détaillées de la partie (III) de cette figure, en faisant abstraction de la position respective des fils dans chaque toron.

Les câbles représentés sur les figures 5 à 11 sont constitués chacun uniquement par un assemblage de deux torons de deux fils. Sur ces figures, les références 1, 2, $Y_1$, $Y_2$, $L_1$, $L_2$, 0 ont la même signification que sur les figures 1 à 4, et les vecteurs $V_1$ et $V_2$ qui ne sont pas référencés dans un but de simplification ont la même signification et la même représentation que sur les figures 2 à 4.

Pour la clarté du dessin, dans les parties (I) de ces figures 5 à 11 des espaces ont été représentés entre les torons de chaque câble, ces torons étant schématisés par les lignes $Y_1$ et $Y_2$ et les fils de ces torons n'étant pas représentés.

Les câbles conformes à l'invention, représentés aux figures 5 à 9 sont des exemples de réalisation du câble 10 précédemment décrit.

— L'assemblage 100A du câble 10A conforme à l'invention représenté à la figure 5 vérifie les conditions suivantes:

$$p_1 = -p_2; p_1 = 2 p_a.$$

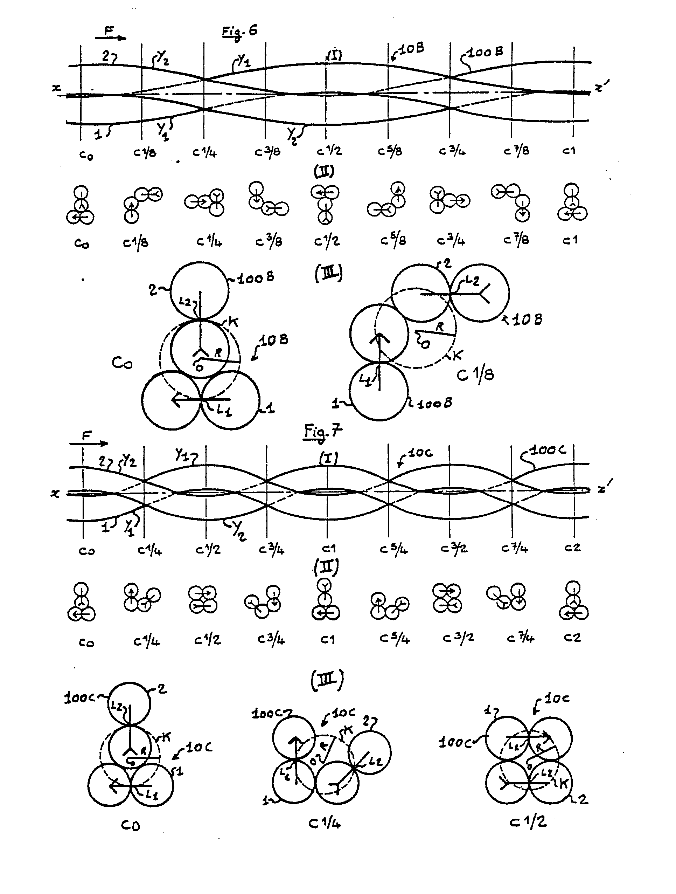

— L'assemblage 100B du câble 10B conforme à l'invention représenté à la figure 6 vérifie les conditions suivantes:

$$p_1 = -p_2; p_1 = {}^1/_2 p_a.$$

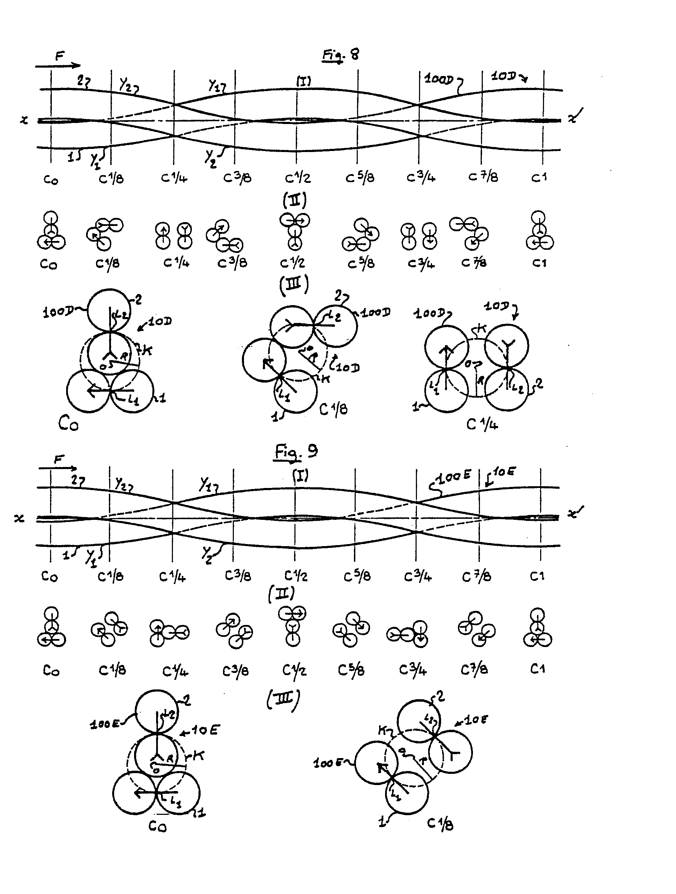

— L'assemblage 100C du câble 10C conforme à l'invention représenté à la figure 7 vérifie les conditions suivantes:

$$p_2 = 2 p_1; p_1 = p_a.$$

— L'assemblage 100D du câble 10D conforme à l'invention représenté à la figure 8 vérifie les conditions suivantes:

$$p_2 = {}^1/_2 p_1; p_1 = p_a.$$

— L'assemblage 100E du câble 10E conforme à l'invention représenté à la figure 9 vérifie les conditions suivantes:

$$p_a = p_1 = -p_2.$$

Les nombres algébriques $p_1$, $p_2$, $p_a$ ont les significations définies précédemment, c'est-à-dire que, par exemple, pour le câble 10A, la longueur du pas du toron 1 est égale à la longueur du pas du toron 2, les sens des torons 1 et 2 sont opposés, le sens du toron 1 est le même que le sens de l'assemblage et la longueur du pas de l'assemblage est égale à la moitié de la longueur du pas de chaque toron 1 ou 2.

Les câbles connus et non conformes à l'invention, représentés aux figures 10, 11 sont tels que dans chaque toron les deux fils ont pratiquement un contact linéaire sous forme d'hélices référencées $L_1$ ou $L_2$. Dans chacun de ces câbles connus les hélices $L_1$, $L_2$ s'enroulent dans le même sens, dit encore «sens de l'assemblage», autour de l'axe xx' de l'assemblage constituant ce câble, avec une longueur de pas commune constante $|p_a|$ dite encore «longueur du pas de l'assemblage». Ces câbles connus ont, de plus, les caractéristiques suivantes:

— l'assemblage 200 du câble 20 connu représenté à la figure 10 est tel que les fils de chaque toron 1 ou 2 restent parallèle entre eux sans s'enrouler l'un autour de l'autre, c'est-à-dire que les longueurs des pas $p_1$ et $p_2$ sont infinies, donc supérieures à 300 mm.

— L'assemblage 300 du câble connu représenté à la figure 11 est tel que les fils du toron 1 restent parallèles entre eux sans s'enrouler l'un autour de l'autre, c'est-à-dire que la longueur du pas $p_1$ est infinie, donc supérieure à 300 mm. L'assemblage 300 vérifie d'autre part la condition suivante:

$$p_2 = p_a.$$

L'étude des figures 5 à 9 donne les indications suivantes sur les assemblages 100A à 100E des câbles 10A à 10E conformes à l'invention.

Pour chacun de ces assemblages, aucun canal continu ne se forme entre les fils des torons, ce qui garantit une bonne pénétration de la matière d'imprégnation dans cet assemblage.

L'encombrement de ces assemblages est faible en particulier pour les assemblages 100B, 100C, 100D, 100E où l'encombrement maximum est de l'ordre du triple du diamètre des fils des torons 1, 2. De plus, cet encombrement varie peu.

Dans chacune des coupes représentées aux parties (II) et (III) des figures 5 à 9, les lignes $L_1$, $L_2$ sont situées pratiquement à la même distance de l'axe xx', pour un assemblage donné, ceci étant mis particulièrement en évidence sur les parties (III) où les lignes $L_1$, $L_2$ sont représentées par des points de même que l'axe xx' représenté par le point 0 (dans un but de simplification, les distances entre $L_1$ et 0 d'une part et entre $L_2$ et 0 d'autre part n'ont pas été référencées). Cette distance est pratiquement constante ou varie peu d'une coupe à l'autre. C'est ainsi que les coupes (III) de chaque figure 5 à 9 représentent en pointillé le cercle de référence K de centre 0 et de rayon R tel que tous les points $L_1$, $L_2$ se trouvent soit sur ce cercle, soit à proximité de ce cercle, R étant constant pour cet assemblage.

Cette disposition des assemblages 100A à 100E permet un travail homogène de ces assemblages par suite d'une répartition homogène des efforts d'une part entre les torons de ces assemblages et d'autre part entre les fils constituant ces torons.

De préférence, lorsqu'on a la relation $p_1 = -p_2$, la longueur du pas $p_a$ étant différente de la longueur des pas $p_1$ et $p_2$, on choisit la longueur du pas $p_a$ supérieure à la longueur des pas $p_1$, $p_2$, comme dans le cas de l'assemblage 100B pour limiter l'encombrement de l'assemblage.

Parmi tous les câbles 10A à 10E, le câble 10E est le câble préféré pour les raisons suivantes:

— L'assemblage 100E présente un encombrement maximum qui est au plus égal à celui des autres assemblages.

— Dans chaque coupe de la figure 9 (III) le cercle K de rayon constant R passe presque exactement par les points $L_1$, $L_2$, c'est-à-dire que les hélices $L_1$, $L_2$ sont des hélices circulaires pratiquement parfaites de même rayon R.

— L'intervalle séparant deux coupes de forme générale identique est le plus court, cet intervalle étant égal à $\dfrac{|p_a|}{4}$. Ce faible intervalle favorise encore davantage le travail homogène de l'assemblage.

L'étude des figures 10, 11 donne les indications suivantes sur les câbles connus.

L'assemblage 200 du câble 20 connu représenté à la figure 10 présente un encombrement qui varie beaucoup et dont le maximum est très important, cet encombrement maximum étant égal environ à quatre diamètres de fils. De plus, la distance de chaque hélice $L_1$, $L_2$ à l'axe de l'assemblage 200 varie beaucoup d'une coupe à l'autre, c'est-à-dire que ces hélices ne peuvent pas être considérées comme des hélices circulaires. C'est ainsi que la figure 10 (III) représente en pointillé le cercle M de centre O passant par les points $L_1$, $L_2$ à la coupe $C^1/_4$, c'est-à-dire lorsque l'encombrement de l'assemblage 200 passe par son maximum. On voit, sur cette figure 10 (III), que sur les coupes $C_0$ et $C^1/_8$ les points $L_1$, $L_2$ sont situés nettement à l'intérieur de ce cercle M, la variation de distance par rapport au point O étant de l'ordre de 100%.

L'assemblage 300 du câble 30 connu représenté à la figure 11 montre une dissymétrie des torons 1, 2 entre eux car pour chaque coupe, la distance de l'hélice $L_1$ à l'axe xx' est inférieure à la distance de l'hélice $L_2$ à cet axe. C'est ainsi que la figure 11 (III) représente pour chaque coupe en pointillé le cercle $N_1$ de centre O passant par le point $L_1$ et le cercle $N_2$ de centre O passant par le point $L_2$. On voit que sur chacune des coupes de cette figure 11 (III) les cercles $N_1$, $N_2$ sont toujours séparés, $N_1$ restant à l'intérieur de $N_2$, c'est-à-dire que les hélices $L_1$, $L_2$ ne sont pas situées sur un même cylindre, l'hélice $L_2$ s'enroulant autour de l'hélice $L_1$. Les variations géométriques des hélices $L_1$, $L_2$ dans ces assemblages connus 200, 300, font que la répartition des efforts entre les torons d'une part et entre les fils constituant ces torons d'autre part est hétérogène ce qui se traduit par un travail hétérogène dans ces assemblages.

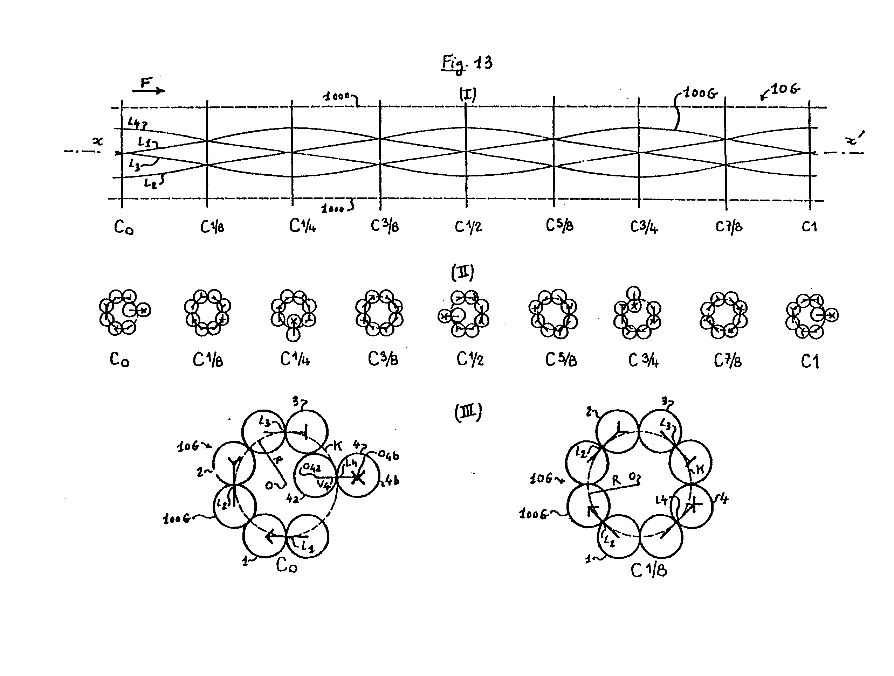

Le câble 10F conforme à l'invention représenté à la figure 12 est une autre réalisation du câble 10 précédemment décrit. Ce câble 10F est constitué uniquement par un assemblage 100F de trois torons de deux fils, des torons étant référencés 1, 2, 3. Pour la simplicité du dessin, le câble 10F est représenté à la figure 12 (I) par le cylindre 1000 précédemment défini et par les hélices de contact $L_1$, $L_2$, $L_3$ représentées sous forme de lignes continues, ces hélices ayant le même sens et la même longueur de pas $|p_a|$. Sur le dessin les références $L_1$, $L_2$ ont la même signification que précédemment, $L_3$ est l'hélice de contact des fils 3a, 3b entre eux, ces fils 3a, 3b constituant le toron 3 dont le pas est $p_3$. La signification et la représentation des vecteurs $V_1$, $V_2$ sont les mêmes que précédemment, ces vecteurs n'étant pas référencés dans un but de simplification. Comme on le voit sur la coupe $C_0$ de la figure 12 (III), le vecteur $V_3$ relatif au toron 3 joint le centre $O_{3a}$ du fil 3a au centre $O_{3b}$ du fil 3b et, pour la clarté du dessin, afin de différencier facilement les vecteurs $V_1$, $V_2$, $V_3$, l'extrémité du vecteur $V_3$ située en $O_{3b}$ a la forme d'un T sur toutes les coupes des figures 12 (II) et 12 (III). Comme précédemment, l'axe xx' de l'assemblage 100F est représenté par le point O sur les coupes de la figure 12 (III). L'assemblage 100F est tel qu'on aie les relations:

$$p_a = p_1 = p_2; \; p_3 = -p_a.$$

Les figures 12 (II) et 12 (III) montrent que les lignes $L_1$, $L_2$, $L_3$ sont situées pratiquement à la même distance de l'axe xx'. C'est ainsi que les coupes 12 (III) représentent en pointillé le cercle K de centre O et de rayon R constant pour cet assemblage 100F, ce cercle étant tel que tous les points $L_1$, $L_2$, $L_3$ se trouvent pratiquement sur ce cercle, c'est-à-dire que les hélices $L_1$, $L_2$, $L_3$ sont pratiquement des hélices circulaires de même rayon R. La disposition du câble 10F conforme à l'invention garantit un travail homogène de l'assemblage 100F par suite d'une répartition homogène des efforts d'une part entre les torons de cet assemblage et d'autre part entre les fils constituant ces torons.

Le câble 10G conforme à l'invention représenté à la figure 13 est une autre réalisation du câble 10 précédemment décrit. Ce câble 10G est constitué uniquement par un assemblage 100G de quatre torons de deux fils, ces torons étant référencés 1, 2, 3, 4. Sur le dessin, les références $L_1$, $L_2$, $L_3$, 0, 1000 ont les mêmes significations que précédemment. La signification et la représentation des vecteurs $V_1$, $V_2$, $V_3$ sont les mêmes que précédemment, ces vecteurs n'étant pas référencés dans un but de simplification. $L_4$ est l'hélice de contact entre les fils 4a, 4b du toron 4, cette hélice ayant le même pas $p_a$ que les hélices $L_1$, $L_2$, $L_3$. Comme on le voit sur la coupe $C_0$ de la figure 13 (III), le vecteur $V_4$ relatif au toron 4 joint le centre $O_{4a}$ du fil 4a au centre $O_{4b}$ du fil 4b et pour la clarté du dessin, l'extrémité du vecteur $V_4$ située en $O_{4b}$ a la forme d'un X sur toutes les coupes des figures 13 (II) et 13 (III). Le toron 4 a les pas $p_4$. L'assemblage 100G vérifie les conditions suivantes:

$$p_a = p_1 = p_2 = p_3 = -p_4.$$

On voit à la figure 13 (III) que les points $L_1$, $L_2$, $L_3$, $L_4$ se trouvent pratiquement sur le cercle K de centre O et de rayon R constant pour l'assemblage 100G, avec les conséquences précédemment décrites qui découlent de cette géométrie pratiquement constante.

Les câbles conformes à l'invention précédemment décrits sont constitués par des assemblages dépourvus d'âme ce qui permet d'améliorer l'homogénéité du travail de tous les torons de ces assemblages.

Les câbles conformes à l'invention peuvent être utilisés pour renforcer une matière, par exemple une gomme de caoutchouc, notamment pour réaliser des enveloppes de pneumatiques. Dans ce cas il est préférable d'enrober les câbles avec une matière compatible avec la gomme de caoutchouc qu'ils doivent renforcer, cette matière étant notamment elle-même une gomme de caoutchouc et l'enrobage étant effectué par exemple par calandrage avant l'incorporation des câbles dans la matière à renforcer. Les fils des câbles conformes à l'invention peuvent être réalisés chacun avec au moins une matière dont la nature peut varier, comme une matière minérale, notamment le verre, une matière organique, notamment une matière cellulosique ou un polymère organique, par exemple un polyester ou un polyamide, ce polymère pouvant être éventuellement aromatique, une matière métallique, notamment l'acier.

A titre d'exemple, lorsque les enveloppes de pneumatiques renforcées par ces câbles sont des enveloppes destinées à des véhicules de tourisme, les longueurs des pas des torons peuvent être très inférieures à 300 mm, ou même à 100 mm. Un tel câble peut être par exemple un câble d'acier de formule $(2 \times 2)$ 28, ce câble étant entièrement constitué par un assemblage de deux torons eux-mêmes constitués chacun par deux fils d'acier de diamètre 0,28 mm, ce câble vérifiant les relations $p_1 = -p_2$, $p_1 = p_a$ avec $|p_1| = |p_2| = |p_a| = 12$ mm.

Lorsque le câble conforme à l'invention est constitué par un assemblage tel que tous les torons ont la même longueur de pas que la longueur du pas de l'assemblage, un ou plusieurs de ces torons, mais pas la totalité des torons, ayant un sens opposé à celui de l'assemblage, et si on compare ce câble non fretté à un câble connu fretté comportant le même nombre de fils que cet assemblage mais enroulés ensemble dans le même pas dont la longueur est égale à la longueur du pas de cet assemblage conforme à l'invention, les fils ayant initialement les mêmes caractéristiques dans les deux cas, on constate que, lorsque ces deux câbles sont disposés dans une gomme de caoutchouc vulcanisée, la résistance à la traction du câble conforme à l'invention est inférieure à celle du câble connu mais que la rigidité à la compression et la résistance à la compression du câble conforme à l'invention sont supérieures à celles du câble connu, de telle sorte que ce câble conforme à l'invention est particulièrement bien adapté à une utilisation dans le sommet des enveloppes de pneumatiques. Tel est le cas notamment pour les câbles conformes à l'invention 10E, 10F, 10G précédemment déscrits.

A titre d'exemple on utulise dans le sommet d'une même enveloppe de pneumatique:

— soit un câble d'acier conforme à l'invention, non fretté, de formule $(2 \times 2)$ 23, ce câble étant entièrement constitué par un assemblage de deux torons eux-mêmes constitués chacun par deux fils d'acier de diamètre 0,23, ce câble vérifiant les relations $p_1 = -p_2$, $p_1 = p_a$ avec $|p_1| = |p_2| = |p_a| = 10$ mm;

— soit un câble fretté connu constitué par quatre fils d'acier de même caractéristiques initiales que celles des fils du câble $(2 \times 2)$ 23, ces fils étant torsadés ensemble dans le même sens avec la même longueur de pas que ce câble $(2 \times 2)$ 23, c'est-à-dire 10 mm.

On constate alors que, dans ce sommet vulcanisé, la résistance à la traction du câble conforme à l'invention est inférieure d'environ 6% à celle du câble connu, mais que la rigidité à la compression et la résistance à la compression du câble conforme à l'invention sont supérieures d'environ 14% à celles du câble connu, ce qui permet d'améliorer les performances de l'enveloppe grâce à ce câble conforme à l'invention.

Les câbles conformes à l'invention précédemment décrits étaient constitués chacun par un seul assemblage de torons de deux fils mais l'invention s'applique aussi aux câbles qui comportent chacun plusieurs assemblages de torons de deux fils, ces assemblages étant par exemple toronnés entre eux. Il faut noter en outre que l'invention s'applique aux câbles qui ne sont pas constitués uniquement par un ou plusieurs assemblages de torons de deux fils, c'est ainsi qu'elle couvre par exemple les câbles comportant une âme constituée par un assemblage de torons de deux fils, cette âme étant entourée par une ou plusieurs couches de fils ou de torons quelconques, ces couches étant notamment insaturées pour permettre une migration de matière.

Les câbles conformes à l'invention peuvent être réalisés avec des équipements connus et selon des procédés connus, ces équipements et ces procédés n'étant pas écrits dans un but de simplification.

Bien entendu, l'invention n'est pas limitée aux exemples de réalisation précédemment décrits.

**Revendications**

1. Câble de renfort constitué uniquement ou au moins en partie par un assemblage de torons de deux fils caractérisé en ce que l'assemblage a les caractéristiques suivantes lorsque son axe est rectiligne:

a) dans chaque toron les deux fils sont enroulés l'un autour de l'autre dans le même sens, dit «sens du toron», avec un pas constant dit «pas du toron», la longueur de ce pas étant inférieure à 300 mm;

b) dans chaque toron les deux fils ont entre eux un contact pratiquement linéaire, cette ligne de contact décrivant pratiquement une hélice, dite «hélice de contact», autour de l'axe de l'assemblage;

c) toutes les hélices de contact ont le même sens dit «sens de l'assemblage», et la même longueur de pas constante dite «longueur du pas de l'assemblage»;

d) l'assemblage vérifie au moins une des deux conditions suivantes:

(I) il est constitué par deux torons, les longueurs des pas de torons étant égales, les sens des torons étant opposés;

(II) il est constitué par au moins deux torons et par au plus quatre torons; la longueur du pas de l'assemblage est égale à la longueur du pas d'au moins un des torons, le sens de l'assemblage étant le même que celui de ce toron ou de ces torons; au moins un autre toron de l'assemblage a soit une longueur de pas différente de la longueur du pas de l'assemblage, soit à la fois une longueur de pas égale à la longueur du pas de l'assemblage et un sens opposé au sens de l'assemblage.

2. Câble de renfort selon la revendication 1, caractérisé en ce que l'assemblage est constitué par deux torons, les longueurs des pas des torons étant égales, les sens des torons étant opposés et en ce que la longueur du pas de l'assemblage est supérieure à la longueur du pas des torons.

3. Câble de renfort selon la revendication 1, caractérisé en ce que l'assemblage est constitué par deux torons, la longueur du pas de l'assemblage étant égale à la longueur du pas d'un des torons, le sens de l'assemblage étant le même que celui de ce toron, l'autre toron ayant une longueur de pas différente de la longueur du pas de l'assemblage, le sens de ce toron étant le même que celui de l'assemblage.

4. Câble de renfort selon la revendication 1, caractérisé en ce que l'assemblage est constitué par deux torons, la longueur du pas de l'assemblage étant égale à la longueur du pas d'un des torons, le sens de l'assemblage étant le même que celui de ce toron, l'autre toron ayant une longueur de pas égale à la longueur du pas de l'assemblage et un sens opposé au sens de l'assemblage.

5. Câble de renfort selon la revendication 1, caractérisé en ce que l'assemblage est constitué par trois torons, la longueur du pas de l'assemblage étant égale à la longueur du pas de deux des torons, le sens de l'assemblage étant le même que celui de ces deux torons, l'autre toron ayant une longueur de pas égale à la longueur du pas de l'assemblage et un sens opposé au sens de l'assemblage.

6. Câble de renfort selon la revendication 1, caractérisé en ce que l'assemblage est constitué par quatre torons, la longueur du pas de l'assemblage étant égale à la longueur du pas de trois des torons, le sens de l'assemblage étant le même que celui de ces trois torons, l'autre toron ayant une longueur de pas éagle à la longueur du pas de l'assemblage et un sens opposé au sens de l'assemblage.

7. Câble de renfort selon l'une quelconque des revendications 1 à 6, caractérisé en ce que les longueurs des pas des torons de l'assemblage sont inférieurs à 100 mm.

8. Câble de renfort selon l'une quelconque des revendications 1 à 7, caractérisé en ce que les hélices de contact des torons sont pratiquement des hélices circulaires de même rayon.

9. Câble de renfort selon la revendication 1, caractérisé en ce qu'il est constitué par un assemblage tel que tous les torons ont la même longueur de pas que la longueur du pas de l'assemblage, un ou plusieurs de ces torons, mais pas la totalité des torons, ayant un sens opposé à celui de l'assemblage, et en ce qu'il est destiné à être utilisé dans le sommet d'une enveloppe de pneumatique.

10. Câble de renfort selon la revendication 9 tel que ses caractéristiques sont conformes à l'une quelconque des revendications 4 à 8.

11. Câble de renfort selon l'une quelconque des revendications 1 à 10, caractérisé en ce qu'il est enrobé avec une matière.

12. Câble de renfort selon la revendication 11, caractérisé en ce que cette matière est une gomme de caoutchouc.

13. Article comportant au moins un câble de renfort conforme à l'une quelconque des revendications 1 à 12.

14. Article selon la revendication 13, caractérisé en ce qu'il est une enveloppe de pneumatique.

15. Enveloppe de pneumatique selon la revendication 14, caractérisée en ce que son sommet comporte au moins un câble de renfort conforme à l'une quelconque des revendications 9 ou 10.

## Patentansprüche

1. Verstärkungsseil, bestehend ganz oder zumindest teilweise aus einer Verbindung von aus zwei Drähten bestehenden Litzen, dadurch gekennzeichnet, dass die Verbindung, wenn ihre Achse geradlinig ist, folgende Kennzeichen aufweist:

a) in jeder Litze sind die beiden Drähte im selben Sinne, genannt «Litzensinn» mit einem konstanten Schritt, genannt «Litzenschritt», wobei die Länge dieses Schrittes kleiner ist als 300 mm, umeinandergeschlagen;

b) in jeder Litze haben die beiden Drähte miteinander einen praktisch linienförmigen Kontakt, wobei diese Kontaktlinie praktisch eine Schraube, genannt «Kontaktschraube», um die Achse der Verbindung beschreibt;

c) alle Kontaktschrauben haben denselben Schraubsinn, genannt «Verbindungssinn» und dieselbe konstante Schrittlänge, genannt «Verbindungsschrittlänge»;

d) die Verbindung erfüllt zumindest eine der beiden folgenden Bedingungen:

(I) sie besteht aus zwei Litzen, die die gleiche Litzenschrittlänge aufweisen und deren Litzensinn entgegengesetzt ist;

(II) sie besteht aus mindestens zwei Litzen und aus höchstens vier Litzen; die Verbindungsschrittlänge ist gleich der Litzenschrittlänge mindestens einer Litze, der Verbindungssinn ist gleich dem Litzensinn dieser Litze oder dieser Litzen; zumindest eine andere Litze der Verbindung hat eine Litzenschrittlänge unterschiedlich von der Verbindungsschrittlänge oder eine Litzenschrittlänge gleich der Verbindungsschrittlänge und zugleich einen Litzensinn umgekehrt zum Verbindungssinn.

2. Verstärkungsseil nach Anspruch 1, dadurch gekennzeichnet, dass die Verbindung aus zwei Litzen besteht, die gleiche Litzenschrittlänge und entgegengesetzten Litzensinn aufweisen, und bei der die Verbindungsschrittlänge grösser ist als die Litzenschrittlänge.

3. Verstärkungsseil nach Anspruch 1, dadurch gekennzeichnet, dass die Verbindung aus zwei Litzen besteht, dass die Verbindungsschrittlänge gleich ist der Litzenschrittlänge einer dieser Litzen, der Verbindungssinn gleich ist dem Litzensinn dieser Litze, dass die andere Litze eine Litzenschrittlänge aufweist, die von der Verbindungsschrittlänge verschieden ist, und dass der Litzensinn dieser Litze gleich ist dem Verbindungssinn.

4. Verstärkungsseil nach Anspruch 1, dadurch gekennzeichnet, dass die Verbindung aus zwei Litzen besteht, dass die Verbindungsschrittlänge gleich ist der Litzenschrittlänge einer Litze, dass der Verbindungssinn gleich ist dem Litzensinn der Litze, dass die andere Litze eine Litzenschrittlänge aufweist, die gleich ist der Verbindungsschrittlänge und einen Litzensinn, der dem Verbindungssinn entgegengesetzt ist.

5. Verstärkungsseil nach Anspruch 1, dadurch gekennzeichnet, dass die Verbindung aus drei Litzen besteht, dass die Verbindungsschrittlänge gleich ist der Litzenschrittlänge von zwei dieser Litzen, dass der Verbindungssinn gleich ist dem Litzensinn dieser Litzen und dass die andere Litze eine Litzenschrittlänge, gleich der Verbindungsschrittlänge, sowie einen Litzensinn entgegengesetzt zum Verbindungssinn, aufweist,

6. Verstärkungsseil nach Anspruch 1, dadurch gekennzeichnet, dass die Verbindung aus vier Litzen besteht, die Verbindungsschrittlänge gleich ist der Litzenschrittlänge dreier dieser Litzen, der Verbindungsinn gleich ist dem Litzensinn dieser drei Litzen und dass die andere Litze eine Litzenschrittlänge gleich der Verbindungsschrittlänge, sowie einen Litzensinn entgegengesetzt zum Verbindungssinn aufweist.

7. Verstärkungsseil nach einem der Ansprüche 1 bis 6, dadurch gekennzeichnet, dass die Litzenschrittlänge der Litzen der Verbindung kleiner als 100 mm ist.

8. Verstärkungsseil nach einem der Ansprüche 1 bis 7, dadurch gekennzeichnet, dass die Kontaktschrauben der Litzen praktisch Kreisschrauben mit gleichem Radius sind.

9. Verstärkungsseil nach Anspruch 1, dadurch gekennzeichnet, dass es aus einer Verbindung besteht, wobei alle Litzen eine Litzenschrittlänge gleich der Verbindungsschrittlänge aufweisen, dass eine oder mehrere dieser Litzen, nicht jedoch alle Litzen einen Litzensinn entgegengesetzt dem Verbindungssinn aufweisen, und dass es dazu bestimmt ist, in einem Luftreifenscheitel verwendet zu werden.

10. Verstärkungsseil nach Anspruch 9, dessen Kennzeichen einem der Ansprüche 4 bis 8 entsprechen.

11. Verstärkungsseil nach einem der Ansprüche 1 bis 10, dadurch gekennzeichnet, dass es von einem Material umhüllt ist.

12. Verstärkungsseil nach Anspruch 11, dadurch gekennzeichnet, dass dieses Material ein Gummi aus Kautschuk ist.

13. Erzeugnis mit mindestens einem Verstärkungsseil entsprechend einem der Ansprüche 1 bis 12.

14. Erzeugnis nach Anspruch 13, dadurch gekennzeichnet, dass es ein Luftreifen ist.

15. Luftreifen nach Anspruch 14, dadurch gekennzeichnet, dass sein Scheitel zumindest ein Verstärkungsseil entsprechend einem der Ansprüche 9 oder 10 aufweist.

## Claims

1. A reinforcement cable formed solely or at least in part by an assembly of strands formed of two wires, characterized by the fact that said assembly has the following characteristics when its axis is rectilinear:

a) in each strand the two wires are wound around each other in the same direction, called the «direction of the strand», with a constant pitch, called the «pitch of the strand», the lenght of this pitch being less than 300 mm;

b) in each strand the two wires have substantially linear contact with each other, this line of contact describing substantially a helix called the «contact helix», around the axis of the assembly;

c) all the contact helices have the same direction, called the «direction of the assembly», and the same constant length of pitch, called the «length of the pitch of the assembly»;

d) the assembly satisfies at least one of the following two conditions:

(I) it is formed of two strands, the lengths of the pitches of the strands being equal and the direction of the strands being opposite;

(II) it is formed of at least two strands and at most four strands; the length of the pitch of the assembly is equal to the length of the pitch of at least one of the strands, the direction of the assembly being the same as that of said strand or strands; at least one other strand of the assembly has either a length of pitch different from the length of the pitch of the assembly or both a length of pitch equal to the length of the pitch of the assembly and a direction opposite to the direction of the assembly.

2. A reinforcement cable according to claim 1, characterized by the fact that the assembly is formed ot two strands, the lengths of the pitches of the strands being equal and the directions of the strands being opposite and by the fact that the length of the pitch of the assembly is greater than the length of the pitch of the strands.

3. A reinforcement cable according to claim 1, characterized by the fact that the assembly is formed of two strands, the length of the pitch of the assembly being equal to the length of the pitch of one of the strands, the direction of the assembly being the same as that of said strand, the other strand having a length of pitch different from the length of pitch of the assembly, the direction of this strand being the same as that of the assembly.

4. A reinforcement cable according to claim 1, characterized by the fact that the assembly is formed of two strands, the length of pitch of the assembly being equal to the length of pitch on one of the strands, the direction of the assembly being the same as that of said strand, the other strand having a length of pitch equal to the length of pitch of the assembly and a direction opposite to the direction of the assembly.

5. A reinforcement cable according to claim 1, characterized by the fact that the assembly is formed of three strands, the length of pitch of the assembly being equal to the length of pitch of two of the strands, the direction of the assembly being the same as that of these two strands, the other strand having a length of pitch equal to the length of pitch of the assembly and a direction opposite to the direction of the assembly.

6. A reinforcement cable according to claim 1, characterized by the fact that the assembly is formed of four strands, the length of pitch of the assembly being equal to the length of pitch of three of the strands, the direction of the assembly being the same as that of these three strands, the other strand having a length of pitch equal to the length of pitch of the assembly and a direction opposite to the direction of the assembly.

7. A reinforcement cable according to any one of claims 1 to 6, characterized by the fact that the lengths of the pitches of the strands of the assembly are less than 100 mm.

8. A reinforcement cable according to any one of claims 1 to 7, characterized by the fact that the contact helices of the strands are substantially circular helices of the same radius.

9. A reinforcement cable according to claim 1, characterized by the fact that it is formed by an assembly such that all the strands have the same length of pitch as the length of pitch of the assembly, one or more of these strands, but not all of these strands, having a direction opposite to the direction of the assembly, and by the fact that it is usable in the crown of a pneumatic tyre.

10. A reinforcement cable according to claim 9 such that its characteristics are according to any one of claims 4 to 8.

11. A reinforcement cable according to any one of claims 1 to 10, characterized by the fact that it is impregnated with a material.

12. A reinforcement cable according to claim 11, characterized by the fact that said material is a rubber.

13. An article comprising at least one reinforcement cable according to any one of claims 1 to 12.

14. An article according to claim 13, characterized by the fact that it is a pneumatic tyre.

15. A pneumatic tyre according to claim 14, characterized by the fact that its crown comprises at least one reinforcement cable according to any one of claims 9 or 10.

0 146 046

Fig. 1

Fig. 2

Fig. 3

Fig. 4

11

Fig. 5

Fig. 6

Fig. 7

Fig. 8

Fig. 9

Fig. 10

Fig. 11

Fig. 12

Fig. 13